# FASCICULE DE BREVET EUROPEEN

(11) **EP 4 548 155 B1**
(45) Date de publication et mention de la délivrance du brevet: **06.05.2026**
(21) Numéro de dépôt: 23736734.7
(22) Date de dépôt: 30.06.2023
(51) Int. Cl.: G02F 1/155, G02F 1/157, G02F 1/163

(54) **MODULE COLORÉ, VÉHICULE AUTOMOBILE ET PROCÉDÉ DE CHANGEMENT DE COULEUR ASSOCIÉS**
FARBMODUL, ZUGEHÖRIGES KRAFTFAHRZEUG UND ZUGEHÖRIGES FARBWECHSELVERFAHREN
COLOURED MODULE, ASSOCIATED MOTOR VEHICLE AND ASSOCIATED COLOUR-CHANGING METHOD

(30) Priorité: 30.06.2022 FR 2206670
(43) Date de publication de la demande: 07.05.2025
(73) Titulaire: VALEO VISION, 93012 Bobigny Cedex (FR)
(72) Inventeur: ALVEAR, Eduardo, 93012 BOBIGNY Cedex (FR); BEDDAR, Sidahmed, 93012 BOBIGNY Cedex (FR)
(74) Mandataire: Valeo Visibility
(86) Numéro de dépôt international: PCT/EP2023/068121
(87) Numéro de publication internationale: WO 2024/003399

(56) Documents cités:
- EP-B1- 3 278 148
- KR-A- 20200 047 889
- CHEN SHANGZHI ET AL: "Tunable Structural Color Images by UV-Patterned Conducting Polymer Nanofilms on Metal Surfaces", ADVANCED MATERIALS, vol. 33, no. 33, 5 July 2021 (2021-07-05), DE, pages 2102451, XP055899532, ISSN: 0935-9648, Retrieved from the Internet <URL:https://onlinelibrary.wiley.com/doi/full-xml/10.1002/adma.202102451> DOI: 10.1002/adma.202102451

## Description

### DOMAINE TECHNIQUE DE L'INVENTION

Le domaine technique de l'invention est celui des carrosseries de véhicules automobiles et de l'amélioration de l'esthétique des véhicules automobiles.

La présente invention concerne un module coloré et un véhicule automobile comprenant ce module. L'invention porte également sur un procédé de changement de couleur d'un module selon l'invention.

### ARRIERE-PLAN TECHNOLOGIQUE DE L'INVENTION

Récemment, des véhicules automobiles présentant la capacité de changer de couleur en temps réel et donc d'être personnalisés ont été présentés. Dans ce type de véhicules, un recouvrement (en anglais « covering ») est déposé sur la carrosserie du véhicule. Le recouvrement est conçu sur la base d'une technologie de type encre électronique, telle que la technologie E-Ink. Des particules noires et blanches baignent dans un fluide contenu entre deux feuilles flexibles jouant le rôle d'électrodes et sont dirigées vers l'une ou l'autre des feuilles en réponse à l'application d'un champ électrique, permettant de définir une couleur à un endroit spécifique entre les deux feuilles. Ainsi, il est possible de personnaliser l'aspect extérieur de ces véhicules. Cependant, la plage de couleurs actuellement disponibles est limitée aux niveaux de gris. Par ailleurs, avec cette technologie, le recouvrement n'est pas visible de nuit.

Le document EP 3278148 B1 divulgue l'utilisation d'un module comprenant un substrat flexible, une couche de matériau organique électrochrome ainsi qu'un guide d'onde transparent.

### RESUME DE L'INVENTION

L'invention offre une solution alternative aux solutions connues de l'art antérieur, permettant de disposer d'une palette de couleurs plus étendue pour personnaliser un véhicule, et de personnaliser le véhicule de jour comme de nuit.

Un premier aspect de l'invention concerne un module coloré tel que selon la revendication indépendante 1. Un autre aspect de l'invention concerne un procédé de changement de couleur d'un module tel que selon la revendication 11. D'autres aspects de l'invention sont présentés dans les revendications dépendantes.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 représente un véhicule automobile avec une première couleur.
- La figure 2 représente le véhicule automobile de la figure 1 avec une deuxième couleur différente de la première couleur.
- La figure 3 représente une structure multicouche selon l'invention.
- La figure 4 illustre la dépendance de la longueur d'onde réfléchie par une couche de matériau organique électrochrome en fonction de l'épaisseur de cette couche.
- La figure 5 représente un module coloré selon un premier aspect de l'invention.
- La figure 6 représente une portion de couche de matériau organique électrochrome structurée comprenant une pluralité de pixels.
- La figure 7 illustre schématiquement le fonctionnement de jour du module coloré selon le premier aspect de l'invention.
- La figure 8 illustre schématiquement le fonctionnement de nuit du module coloré selon le premier aspect de l'invention.

### DESCRIPTION DETAILLEE

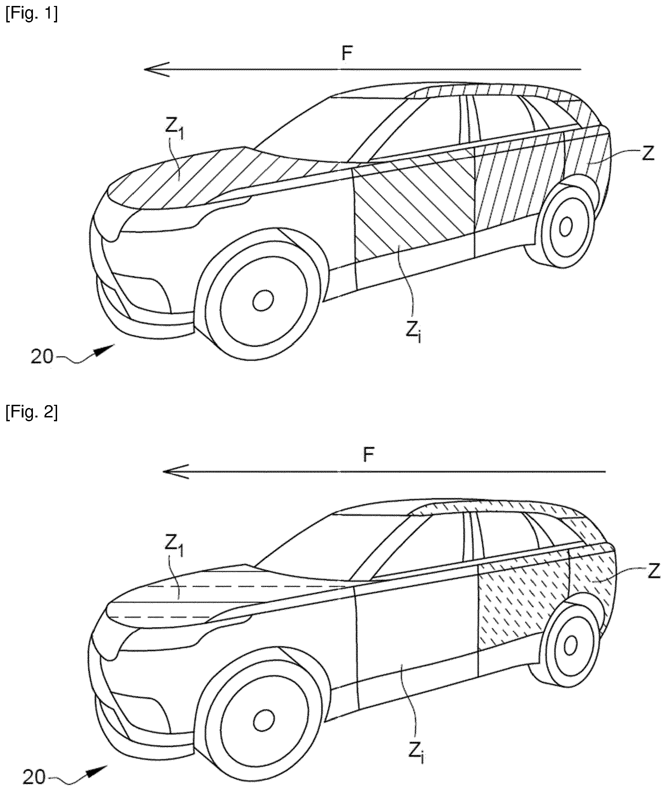

La figure 1 montre une un véhicule automobile 20 présentant une première couleur. La flèche F indique le sens d'avancée du véhicule automobile 20, L'avant est situé dans la direction pointée par la flèche F. Dans cet exemple, la partie arrière de la carrosserie présente une première couleur arrière et la partie avant de la carrosserie présente une première couleur avant.

La figure 2 montre le même véhicule automobile 20 avec une deuxième couleur différente de la première couleur On peut observer que la partie arrière de la carrosserie présente une deuxième couleur arrière différente de la première couleur arrière. De même, la partie avant de la carrosserie présente, selon la deuxième couleur, une deuxième couleur avant différente de la première couleur avant.

Le principe, fonctionnant de jour comme de nuit, du passage d'une zone Z de la carrosserie du véhicule automobile 20 de la première coloration à la deuxième coloration va être décrit ci-dessous. La zone Z peut couvrir une partie voire l'ensemble de la carrosserie du véhicule 20.

Afin de permettre un changement de couleur de la zone Z, on recouvre cette dernière d'une structure S représentée sur la figure 2. La structure S est par exemple collée sur la zone Z de la carrosserie du véhicule automobile 20. Alternativement, la structure S peut être fixée mécaniquement sur la zone Z.

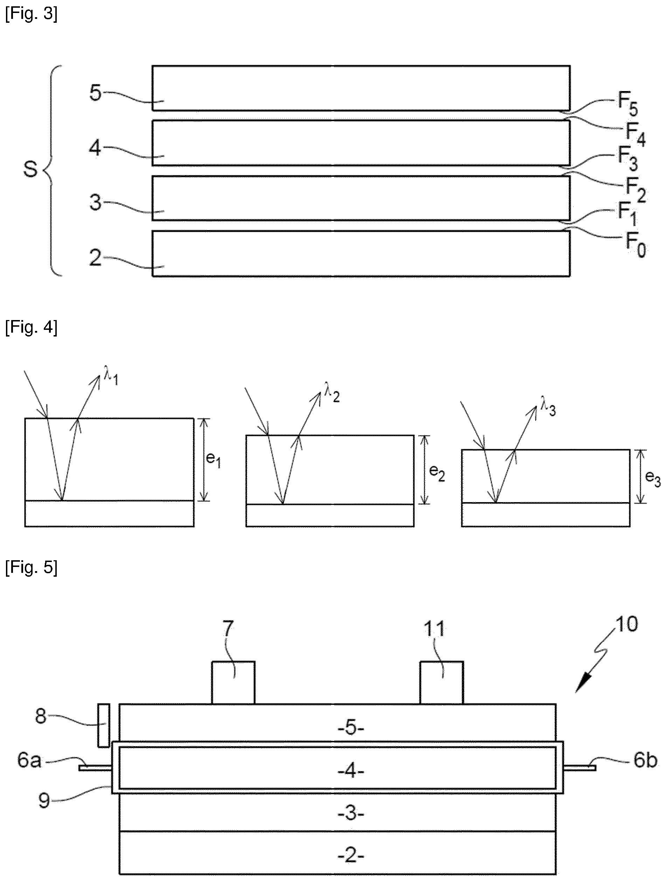

La figure 3 est une représentation schématique en éclaté de la structure S. La structure 1 est une structure multicouche composée de l'empilement d'un substrat flexible 2, d'une couche métallique 3, d'une couche de matériau organique électrochrome 4 et d'un guide d'onde transparent 5. Comme il va être expliqué par la suite, la couleur de la zone Z est déterminée par la couche de matériau organique électrochrome 4.

Par exemple, le substrat flexible 2 est en silicone, en polycarbonate ou en PMMA. Le substrat 2 a par exemple une épaisseur de 500 microns.

La couche métallique 3 est délimitée par une première face F1 et une deuxième face F2. La première face F1 est en contact avec une face F0 du substrat flexible 2. Par exemple, la couche métallique 3 peut être constituée d'aluminium, de chrome ou d'or. La couche métallique 3 a par exemple une épaisseur comprise entre 70 et 100 nm.

La couche de matériau organique électrochrome 4 est délimitée par une troisième face F3 et une quatrième face F4. Par électrochrome, il est entendu un matériau qui change de couleur lorsqu'une tension électrique lui est appliquée pendant une durée courte. Le matériau conserve la nouvelle couleur après l'application de la tension. La troisième face F3 est en contact avec la deuxième face F2. Par exemple, le matériau organique électrochrome est du PEDOT (poly(3,4-éthylènedioxythiophène)). D'autres exemples de matériau électrochrome pouvant être utilisés sont du 2-alkylthieno[3,4-b] thiophène (T34bT), du PMMA ou du polycarbonate. La couche de matériau organique électrochrome 4 a par exemple une épaisseur comprise entre 75 et 300 nm.

Le guide d'onde transparent 5 a pour fonction d'éclairer la couche de matériau organique électrochrome 4 de nuit. Le guide d'onde transparent 5 est en contact, par une cinquième face F5, avec la quatrième face F4. A cette fin, une source lumineuse d'illumination 8 du guide d'onde 5 est prévue pour illuminer le guide d'onde 5 pendant la nuit, ou dès que l'éclairage ambiant atteint un seuil minimum.

Le guide d'onde transparent 5 et la source lumineuse d'illumination 8 sont fixés mécaniquement à la couche de matériau organique électrochrome 4, par exemple au niveau des bords de la structure S.

Le guide d'onde transparent 5 est par exemple un film transparent d'une épaisseur typique de 50 microns et comprenant des microstructures. Dans ce cas, la source lumineuse d'illumination 8 du guide d'ondes 5 est composée d'une rangée de diodes électroluminescentes positionnée le long d'un bord du film transparent. La densité de microstructures augmente avec la distance aux diodes électroluminescentes, afin de diffuser uniformément la lumière à travers le film transparent. Le film transparent peut être en polycarbonate, en PMMA, en PET (polytéréphtalate d'éthylène), ou en TPU (polyuréthane thermoplastique). Un tel film transparent peut, lorsqu'il est éclairé par une diode électroluminescente de luminance 1000 cd/m², présenter une luminance comprise entre 100 et 100 cd/m². Par exemple, un film transparent de la société Azumo Tech peut être utilisé.

Dans un premier mode de réalisation, la zone Z est monochrome. Alors, la couche de matériau organique électrochrome 4 présente une épaisseur uniforme.

On décrit ci-après comment la couche de matériau organique électrochrome 4 produit la couleur perçue par un observateur. La couche de matériau organique électrochrome 4 agit comme une cavité Fabry-Pérot formée par la première face F1 et la deuxième face F2. Cette cavité produit, à partir de la lumière ambiante qu'elle reçoit, des interférences de longueur d'onde déterminée. Ces interférences se traduisent par des réflexions multiples de rayons colorés se propageant en sens inverse des rayons constituant la lumière ambiante. Ainsi, c'est par un phénomène d'interférences, et non d'absorption comme lorsque des pigments ou des colorants sont utilisés, que la couche de matériau organique électrochrome 4 produit, pour un observateur, un rendu coloré de la zone Z.

L'épaisseur de la couche de matériau organique électrochrome 4 a une influence sur la couleur perçue par un observateur. Par exemple, comme illustré schématiquement sur la figure 3, une couche de PEDOT d'épaisseur e₁ égale à 800 nm produit une couleur rouge de longueur d'onde λ₁, une couche de PEDOT d'épaisseur e₂ égale à 600 nm produit une couleur verte de longueur d'onde λ₂, une couche de PEDOT d'épaisseur e₃ égale à 500 nm produit une couleur bleue longueur d'onde λ₃.

De jour, la lumière ambiante reçue par la couche de matériau organique électrochrome est la lumière du soleil. De nuit ou au crépuscule, la lumière ambiante est faible, de sorte que la source lumineuse d'illumination 8 du guide d'onde 5 est allumée afin d'illuminer le guide d'onde 5, et d'éclairer, par conséquent, la couche de matériau organique électrochrome 4.

On décrit ci-après comment opérer un changement de couleur de la zone Z.

Comme représenté sur la figure 5, la couche de matériau organique électrochrome 4, est encapsulée dans une couche d'électrolyte 9 sur laquelle sont connectéesune première électrode 6a et une deuxième électrode 6b. Par exemple, la couche d'électrolyte est une solution aqueuse de dodécylbenzènesulfonate de sodium (NaDBS). L'encapsulation et l'agencement de la première électrode 6a et de la deuxième électrode 6b sont effectués similairement à ceux d'une plaque de cristaux liquides. Les électrodes 6a,6b sont connectées à une batterie basse tension les alimentant, et reliées à une carte électronique connectée au réseau électrique du véhicule. La carte électronique permet de commander l'application d'une tension de polarisation entre la première électrode et la deuxième électrode et de faire varier celle-ci en fonction de la couleur souhaitée.

Par sa propriété électrochrome, sous l'application de la tension de polarisation, la couche de matériau organique électrochrome 4 change de couleur. Une table de correspondance entre la couleur souhaitée et la tension à appliquer entre la première électrode 6a et la deuxième électrode 6b permet de commander en tension le changement de couleur de la zone 2. La table de correspondance dépend du matériau de la couche de matériau organique électrochrome 4. Par exemple, la tension de polarisation varie entre une tension minimale de - 10 Volts et une tension maximale de + 10 Volts.

Par exemple, si la couche de matériau organique électrochrome 4 est une couche de PEDOT d'épaisseur 600 nm, sans polarisation, cette couche apparaît verte. Après application d'une tension d'1 Volt sur cette couche de PEDOT, la couche apparaît rouge. Après application d'une tension de 10 Volts sur cette couche de PEDOT, la couche apparaît noire. Après application d'une tension de -1 Volt sur cette couche de PEDOT, la couche apparaît rouge.

Alternativement, la couche de matériau organique électrochrome 4 est structurée en N éléments. Par exemple, la couche de matériau organique électrochrome 4 est structurée en une matrice de N pixels. Chaque pixel parmi les N pixels est encapsulé dans une solution ou un gel d'électrolyte, auquel est connectée une paire d'électrodes prévue pour polariser en tension le pixel correspondant. L'encapsulation et l'agencement des N pixels et l'agencement des paires d'électrodes sur chaque pixel sont effectués similairement à ceux d'une plaque de cristaux liquides.

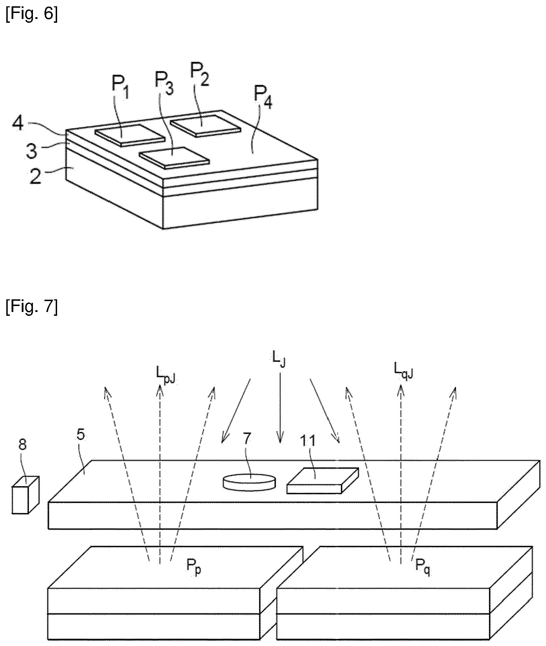

Dans un deuxième mode de réalisation, la zone 2 est destinée à l'affichage d'un motif, tel qu'un logo, une expression. La zone 2 est ainsi multicolore. Alors, la couche de matériau organique électrochrome 4 est structurée en N éléments. Par exemple, la couche de matériau organique électrochrome 4 est structurée en une matrice de N pixels. La couche de matériau organique électrochrome 4 étant réalisée en un unique matériau, l'épaisseur des N pixels est variée d'un pixel à l'autre de manière à ajuster la couleur produite par ceux-ci lorsque la couche de matériau organique électrochrome 4 n'est pas polarisée en tension. Un exemple de portion de la structure 3 correspondante, avec quatre pixels P₁, P₂, P₃ et P₄ d'épaisseurs différentes, est représenté à la figure 6.

Avantageusement, chaque pixel parmi les N pixels est encapsulé dans une solution ou un gel d'électrolyte, auquel est connectéeune paire d'électrodes prévues pour polariser en tension le pixel correspondant. L'encapsulation et l'agencement des N pixels et l'agencement des paires d'électrodes sur chaque pixel sont effectués similairement à ceux d'une plaque de cristaux liquides. L'ensemble des N paires d'électrodes est connecté à une batterie basse tension et relié à une carte électronique connectée au réseau électrique du véhicule. La carte électronique permet de piloter la tension aux bornes de chaque paire d'électrodes en faisant varier celle-ci en fonction de la couleur souhaitée. Une table de correspondance entre la couleur souhaitée et la tension à appliquer aux bornes d'une paire d'électrodes permet de commander en tension le changement de couleur d'un pixel de la zone Z. Par exemple, la tension aux bornes d'une paire d'électrodes varie entre une tension minimale de - 10 Volts et une tension maximale de + 10 Volts.

Un premier aspect de l'invention porte sur un module 10 comprenant la structure 1, la source lumineuse d'illumination 8 du guide d'onde 5 et un photodétecteur de mesure 7 d'un flux de lumière ambiante. Le module 10 est représenté sur la figure 5.

Le photodétecteur de mesure 7 est prévu pour mesurer le flux de lumière environnant la structure S, afin de déterminer si cette dernière reçoit suffisamment de lumière pour produire des couleurs par interférences comme expliqué plus haut.

Le photodétecteur de mesure 7 est par exemple une photodiode placée au centre de la zone Z. Avantageusement, le photodétecteur de mesure 7 est placé sur une surface sensiblement horizontale du véhicule automobile 20.

La figure 7 illustre le fonctionnement du module 10 de jour. Si le flux de lumière ambiante mesuré par le photodétecteur de mesure 7 est supérieur à une valeur seuil Fₛₑᵤᵢₗ, la source lumineuse d'illumination 8 reste éteinte et le rendu coloré du module 10 est dû aux interférences produites par la lumière du jour représentée par les flèches L_{J} sur la figure 6. Par exemple, la valeur seuil Fₛₑᵤᵢₗ peut être telle que la luminance de la zone Z, produite par réflexion du flux de lumière ambiante reçu, soit comprise entre 200 et 500 cd/m². Les pixels Pₚ et P_{q} réfléchissent ainsi respectivement les rayons colorés L_{pJ} et L_{qJ}.

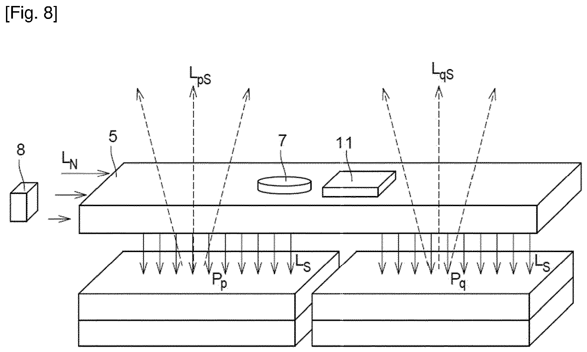

La figure 8 illustre le fonctionnement du module 10 de nuit, ou plus généralement, dès que la luminosité environnante n'est plus suffisante pour rendre la zone Z visible. Dès que le flux de lumière ambiante mesuré par le photodétecteur de mesure est inférieur à la valeur seuil Fₛₑᵤᵢₗ, la source lumineuse d'illumination 8 du guide d'onde transparent 5 est activée et illumine le guide d'onde transparent 5. Cette illumination est schématiquement représentée par les flèches L_{N} sur la figure 8. Le rendu coloré du module 10 est dû aux interférences produites par la lumière du guide d'onde transparent 5 illuminé par la source lumineuse d'illumination 8 et incidente sur les pixels Pₚ et P_{q}, représentée par les flèches L_{S} sur la figure 7. Les pixels Pₚ et P_{q} réfléchissent ainsi respectivement les rayons colorés L_{pS} et L_{qS}.

Ainsi, les couleurs de la zone Z sont visibles également de nuit grâce à l'éclairage de la couche de matériau organique électrochrome 4 par le guide d'onde transparent 5 illuminé.

Avantageusement, le module 10 selon l'invention comprend également un capteur de proximité 11. Le capteur de proximité 11 permet par exemple de détecter des piétons ou d'autres véhicules au voisinage du véhicule automobile 20.

Par exemple, le capteur de proximité 11 est placé sur le guide d'onde transparent 5. En particulier, le capteur de proximité 11 peut être placé à l'arrière du véhicule automobile 20 dans cet exemple.

De manière générale, le capteur de proximité 11 est placé sur une surface sensiblement verticale du véhicule automobile 20.

Lorsque le capteur de proximité 11 produit un signal généré par la détection d'un piéton ou d'un autre véhicule, un changement de couleur de la zone Z peut être actionné pour améliorer la visibilité de la zone Z. La zone Z peut en effet avoir un rôle de signalement. Le signal produit par le capteur de proximité 11 est par exemple transmis à la carte électronique qui pilote un ou plusieurs changements de tensions de polarisation afin de changer la couleur de toute ou partie de la zone Z.

Par exemple, la zone Z est une portière du véhicule automobile 20.

Dans un autre exemple, la zone Z est située sur la calandre du véhicule automobile 20.

Un autre aspect de l'invention concerne le pilotage des couleurs d'une pluralité de zones colorées Z₁, Z₂, Zᵢ,... Z_{N} de la carrosserie du véhicule automobile 20. Ces couleurs peuvent être pilotées de manière similaire au pilotage de la couleur de la zone Z précédemment décrit.

Par exemple, la pluralité de zones colorées Z₁, Z₂,... Z_{N} comprend une ou plusieurs portions de la carrosserie du véhicule automobile 20, telle qu'une portière, ou le logo du situé sur la calandre, voire l'ensemble du véhicule automobile 20.

Chacune parmi la pluralité de zones colorées Z₁, Z₂, Z_{N} de la carrosserie est recouverte d'une structure correspondante S₁, S₂, S_{N} collée ou fixée mécaniquement sur la zone colorée Zᵢ correspondante. Chaque structure correspondante Si est une structure multicouche similaire à la structure S précédemment décrite.

La couche de matériau organique électrochrome 4i de chaque structure correspondante Si est est soit d'épaisseur constante, et encapsulée dans une couche d'électrolyte, sur laquelle est connectée une paire d'électrodes, soit structurée en N pixels encapsulés chacun dans une couche d'électrolyte et connectés chacun à une paire d'électrodes. Dans les deux cas, les électrodes sont alimentées par une pluralité de batteries basse tension et reliées à un système électronique embarqué de type maître-esclave connecté au réseau électrique du véhicule 20.

Le système électronique de type maître-esclave permet de piloter le changement de couleurs des différentes zones colorées Zᵢ, soit de manière simultanée, soit de manière sélective, par exemple en pilotant une unique structure Si ou un sous-groupe de structures correspondantes {S_{α},.. S_{γ}} parmi la pluralité de structures S₁, S₂, S_{N}. Le système électronique de type maître-esclave peut par exemple recevoir des instructions envoyées par un utilisateur à partir du tableau de bord du véhicule automobile 20.

Ainsi, l'invention permet de personnaliser l'extérieur d'un véhicule, par le pilotage du changement de couleur de différentes zones de la carrosserie via l'application de tensions de polarisation basses au niveau des différentes zones.

## Revendications

1. Module coloré (10), comprenant :
- une structure (S) comprenant :
- un substrat flexible (2),
- une couche métallique (3) délimitée par une première face (F1) et une deuxième face (F2), la première face (F1) étant en contact avec une face (F0) du substrat flexible,
- une couche de matériau organique électrochrome (4) délimitée par une troisième face (F3) et une quatrième face (F4), la troisième face (F3) étant en contact avec la deuxième face (F2),
- un guide d'onde transparent (5) en contact avec la quatrième face (F4),
- au moins une paire d'électrodes (6) connectées sur la couche de matériau organique électrochrome (4),
- un photodétecteur de mesure (7) d'un flux de lumière ambiante,
- une source lumineuse d'illumination (8) du guide d'onde transparent (5) lorsque le flux de lumière ambiante est inférieur à une valeur seuil
**caractérisé en ce que** ladite couche de matériau organique électrochrome (4) agit comme une cavité Fabry-Pérot produisant, à partir de la lumière ambiante qu'elle reçoit ou à partir de la lumière de la source lumineuse d'illumination (8) du guide d'onde transparent (5) lorsque le flux de lumière ambiante est inférieur à la valeur seuil, des interférences de longueur d'onde déterminée pour un rendu coloré.

2. Module (10) selon la revendication 1, dans lequel :
- la couche de matériau organique électrochrome (4) est structurée en N éléments, au moins deux éléments parmi les N éléments présentant des épaisseurs différentes,
- la au moins une paire d'électrodes consiste en N paires d'électrodes, chacune parmi les N paires d'électrodes étant connectée aux bords d'un élément correspondant parmi les N éléments.

3. Module (10) selon l'une des revendications 1 ou 2, dans lequel le matériau organique électrochrome (4) est du PEDOT.

4. Module (10) selon l'une des revendications précédentes, dans lequel le substrat flexible (2) est en silicium, en polycarbonate ou en PMMA.

5. Module (10) selon l'une des revendications précédentes, dans lequel le guide d'onde transparent (5) est un film transparent comprenant des microstructures.

6. Module (10) selon l'une des revendications précédentes, dans lequel la structure (1) présente une épaisseur de 50 microns.

7. Module (10) selon l'une des revendications précédentes, comprenant en outre un capteur de proximité (11).

8. Véhicule automobile comprenant un module (10) selon l'une des revendications précédentes.

9. Véhicule automobile selon la revendication 10, dans lequel le module (10) est fixé sur une portière du véhicule automobile.

10. Véhicule automobile selon la revendication 10, dans lequel le module (10) est fixé sur la calandre du véhicule automobile.

11. Procédé de changement de couleur d'un module (10) selon l'une des revendications 1 à 9, comprenant les étapes suivantes :
- une étape de mesure (E0), par le photodétecteur (7), d'un flux de lumière ambiante,
- si le flux de lumière ambiante mesuré est inférieur à la valeur seuil, une étape d'illumination (E1), par la source lumineuse d'illumination (8), du guide d'onde transparent (5),
- une étape (E2) d'application d'une tension comprise entre une tension minimale de -10 V et une tension maximale de + 10 V entre les électrodes de la paire d'électrodes.

12. Procédé selon la revendication 11 de changement de couleur d'un module selon la revendication 7, dans lequel la tension appliquée à l'étape (E2) dépend d'un signal reçu par le capteur de proximité (11).

## Patentansprüche

1. Farbmodul (10), umfassend:
- eine Struktur (S), umfassend:
- ein flexibles Substrat (2),
- eine metallische Schicht (3), die durch eine erste Fläche (F1) und eine zweite Fläche (F2) begrenzt ist, wobei die erste Fläche (F1) in Kontakt mit einer Fläche (FO) des flexiblen Substrats steht,
- eine Schicht aus elektrochromen organischen Material (4), die durch eine dritte Fläche (F3) und eine vierte Fläche (F4) begrenzt ist, wobei die dritte Fläche (F3) in Kontakt mit der zweiten Fläche (F2) steht,
- einen transparenten Wellenleiter (5) in Kontakt mit der vierten Fläche (F4),
- mindestens ein Paar Elektroden (6), die mit der Schicht aus elektrochromen organischen Material (4) verbunden sind,
- einen Photodetektor (7) zur Messung eines Umgebungslichtflusses,
- eine Lichtquelle (8) zur Beleuchtung des transparenten Wellenleiters (5), wenn der Umgebungslichtfluss unter einem Schwellenwert liegt,
**dadurch gekennzeichnet, dass** die Schicht aus elektrochromen organischen Material (4) als Fabry-Pérot-Resonator wirkt, der aus dem empfangenen Umgebungslicht oder aus dem Licht der Beleuchtungslichtquelle (8) des transparenten Wellenleiters (5), wenn der Umgebungslichtfluss unter dem Schwellenwert liegt, Interferenzen bestimmter Wellenlänge für eine farbige Wiedergabe erzeugt.

2. Modul (10) nach Anspruch 1, wobei:
- die Schicht aus elektrochromen organischen Material (4) in N Elemente strukturiert ist, wobei mindestens zwei Elemente unter den N Elementen unterschiedliche Dicken aufweisen,
- das mindestens eine Paar Elektroden aus N Elektrodenpaaren besteht, wobei jedes der N Elektrodenpaare mit den Rändern eines entsprechenden Elements unter den N Elementen verbunden ist.

3. Modul (10) nach einem der Ansprüche 1 oder 2, wobei das elektrochrome organische Material (4) PEDOT ist.

4. Modul (10) nach einem der vorhergehenden Ansprüche, wobei das flexible Substrat (2) aus Silizium, Polycarbonat oder PMMA besteht.

5. Modul (10) nach einem der vorhergehenden Ansprüche, wobei der transparente Wellenleiter (5) ein transparenter Film mit Mikrostrukturen ist.

6. Modul (10) nach einem der vorhergehenden Ansprüche, wobei die Struktur (1) eine Dicke von 50 Mikrometer aufweist.

7. Modul (10) nach einem der vorhergehenden Ansprüche, weiterhin umfassend einen Näherungssensor (11).

8. Kraftfahrzeug, umfassend ein Modul (10) nach einem der vorhergehenden Ansprüche.

9. Kraftfahrzeug nach Anspruch 10, wobei das Modul (10) an einer Tür des Kraftfahrzeugs befestigt ist.

10. Kraftfahrzeug nach Anspruch 10, wobei das Modul (10) am Kühlergrill des Kraftfahrzeugs befestigt ist.

11. Verfahren zum Farbwechsel eines Moduls (10) nach einem der Ansprüche 1 bis 9, umfassend die folgenden Schritte:
- einen Messschritt (E0) eines Umgebungslichtflusses durch den Photodetektor (7),
- wenn der gemessene Umgebungslichtfluss unter dem Schwellenwert liegt, einen Beleuchtungsschritt (E1) des transparenten Wellenleiters (5) durch die Beleuchtungslichtquelle (8),
- einen Schritt (E2) des Anlegens einer Spannung zwischen einer Mindestspannung von -10 V und einer Höchstspannung von +10 V zwischen den Elektroden des Elektrodenpaars.

12. Verfahren nach Anspruch 11 zum Farbwechsel eines Moduls nach Anspruch 7, wobei die im Schritt (E2) angelegte Spannung von einem durch den Näherungssensor (11) empfangenen Signal abhängt.

## Claims

1. Colored module (10), comprising:
- a structure (S) comprising:
- a flexible substrate (2),
- a metallic layer (3) delimited by a first face (F1) and a second face (F2), the first face (F1) being in contact with a face (F0) of the flexible substrate,
- a layer of electrochromic organic material (4) delimited by a third face (F3) and a fourth face (F4), the third face (F3) being in contact with the second face (F2),
- a transparent waveguide (5) in contact with the fourth face (F4),
- at least one pair of electrodes (6) connected to the layer of electrochromic organic material (4),
- a photodetector (7) for measuring ambient light flux,
- a light source (8) for illuminating the transparent waveguide (5) when the ambient light flux is below a threshold value
**characterized in that** said layer of electrochromic organic material (4) acts as a Fabry-Pérot cavity producing, from the ambient light it receives or from the light of the illumination light source (8) of the transparent waveguide (5) when the ambient light flux is below the threshold value, interferences of determined wavelength for a colored rendering.

2. Module (10) according to claim 1, wherein:
- the layer of electrochromic organic material (4) is structured into N elements, at least two elements among the N elements having different thicknesses,
- the at least one pair of electrodes consists of N pairs of electrodes, each among the N pairs of electrodes being connected to the edges of a corresponding element among the N elements.

3. Module (10) according to one of claims 1 or 2, wherein the electrochromic organic material (4) is PEDOT.

4. Module (10) according to one of the preceding claims, wherein the flexible substrate (2) is made of silicon, polycarbonate or PMMA.

5. Module (10) according to one of the preceding claims, wherein the transparent waveguide (5) is a transparent film comprising microstructures.

6. Module (10) according to one of the preceding claims, wherein the structure (1) has a thickness of 50 microns.

7. Module (10) according to one of the preceding claims, further comprising a proximity sensor (11).

8. Automotive vehicle comprising a module (10) according to one of the preceding claims.

9. Automotive vehicle according to claim 10, wherein the module (10) is fixed on a door of the automotive vehicle.

10. Automotive vehicle according to claim 10, wherein the module (10) is fixed on the grille of the automotive vehicle.

11. Method for changing the color of a module (10) according to one of claims 1 to 9, comprising the following steps:
- a measurement step (E0), by the photodetector (7), of an ambient light flux,
- if the measured ambient light flux is below the threshold value, an illumination step (E1), by the illumination light source (8), of the transparent waveguide (5),
- a step (E2) of applying a voltage between a minimum voltage of -10 V and a maximum voltage of + 10 V between the electrodes of the pair of electrodes.

12. Method according to claim 11 for changing the color of a module according to claim 7, wherein the voltage applied in step (E2) depends on a signal received by the proximity sensor (11).
